# EUROPÄISCHE PATENTSCHRIFT

(11) **EP 3 541 603 B1**
(45) Veröffentlichungstag und Bekanntmachung des Hinweises auf die Patenterteilung: **06.12.2023**
(21) Anmeldenummer: 17778282.8
(22) Anmeldetag: 04.10.2017
(51) Int. Cl.: B29C 64/106, B29C 64/40, B29C 64/209, B29C 64/245, B33Y 10/00, B33Y 30/00

(54) **3D-DRUCKVERFAHREN MIT ERHÖHTER FESTIGKEIT DES HERGESTELLTEN OBJEKTS**
3-D PRINTING METHOD HAVING INCREASED STRENGTH OF THE PRODUCED OBJECT
PROCÉDÉ D'IMPRESSION 3D FORMANT UN OBJET DOTÉ D'UNE SOLIDITÉ AUGMENTÉE DE L'OBJET FABRIQUÉ

(30) Priorität: 16.11.2016 DE 102016222558
(43) Veröffentlichungstag der Anmeldung: 25.09.2019
(73) Patentinhaber: Robert Bosch GmbH, 70442 Stuttgart (DE)
(72) Erfinder: FISCHER, Florian, 71638 Ludwigsburg (DE); LUNG, Norman, 71384 Weinstadt (DE); JAHNLE, Hendrik, 71397 Leutenbach (DE)
(86) Internationale Anmeldenummer: PCT/EP2017/075138
(87) Internationale Veröffentlichungsnummer: WO 2018/091193

(56) Entgegenhaltungen:
- US-A- 5 997 795
- US-A1- 2002 053 758
- US-A1- 2013 170 171
- US-A1- 2015 147 421
- US-A1- 2015 273 763
- US-A1- 2016 221 269

## Beschreibung

Die vorliegende Erfindung betrifft ein 3D-Druckverfahren zur Herstellung dreidimensionaler Objekte mit frei wählbarer Formgebung.

### Stand der Technik

Beim herkömmlichen 3D-Druck (Fused Deposition Modeling, FDM) wird ein thermoplastisches Druckmaterial aufgeschmolzen und im flüssigen Zustand selektiv an die Stellen, die zu dem herzustellenden Objekt gehören, verbracht. Wenn das Druckmaterial anschließend erkaltet, erstarrt es wieder. Auf diese Weise können Objekte mit frei wählbarer Formgebung schichtweise aufgebaut werden.

Zur Erhöhung der Festigkeit der hergestellten Objekte ist es aus der US 2016/046 803 A1 bekannt, als Druckmaterial ein polymerisierbares Monomer zu verwenden, dem ein faserförmiger Verstärkungsstoff zugesetzt ist. Dabei kann das Druckmaterial eine Konsistenz haben, in der es sich in einer Stapelung von mehreren Schichten aufbringen lässt, so dass ein dreidimensionales Vorläufer-Objekt entsteht. Das Monomer kann dann in dem zusammenhängenden Vorläufer-Objekt en bloc polymerisiert werden. Es entsteht ein endgültiges Objekt aus dem festen Polymer, dessen Festigkeit zusätzlich durch die darin eingebetteten Fasern des Verstärkungsstoffes versteift ist.

Dieses Druckverfahren zwingt zu Kompromissen bezüglich der realisierbaren Formgebungen, insbesondere in Bezug auf filigrane Konturen. Die gedruckten Strukturen müssen zumindest so lange stabil bleiben, bis das Vorläufer-Objekt durch die Polymerisation verfestigt wird.

Das Dokument US5,997,795 offenbart ein Verfahren zur Herstellung einer Negativform aus Polymeren in einem Schicht für Schicht Verfahren, wobei anschließend die entstandenen Hohlräume mit einer Art Aufschlämmung gefüllt werden. Dieses Dokument offenbart den Oberbegriff des Anspruchs 1.

In den Offenlegungsschriften US 2002/0053758 A1, US 2015/0273763 A1, US 2013/0170171 A1, US 2015/0147421 A1 und US 2016/0221269 A1 sind weitere Herstellungsverfahren für dreidimensionale Objekte offenbart.

### Offenbarung der Erfindung

Im Rahmen der Erfindung wurde ein Verfahren zur Herstellung eines dreidimensionalen Objekts gemäß dem Anspruch 1 entwickelt. Bei diesem Verfahren wird zunächst eine Druckstruktur mittels 3D-Druck aus einem Druckmaterial gefertigt. Diese Druckstruktur definiert einen Innenraum. Anschließend wird ein Füllmaterial, welches mindestens ein flüssiges oder pastöses Monomer umfasst, in den Innenraum eingebracht. Schließlich wir das Monomer zu einem Polymer polymerisiert.

Die Funktion des Innenraums ist in diesem Zusammenhang, beim Befüllen mit dem Füllmaterial dessen Ausbreitung räumlich zu begrenzen. Hierfür ist es nicht erforderlich, dass der Innenraum allseitig umschlossen ist.

Beispielsweise definiert auch eine aus dem Druckmaterial gefertigte, nach oben offene Wanne einen Innenraum, der mit dem Füllmaterial ausfüllbar ist. Das Füllmaterial ist dann in dieser Wanne gefangen und kann nicht auslaufen. Der Innenraum kann insbesondere die Negativform einer aus dem Polymer herzustellenden Objektstruktur, oder einen Teil einer solchen Objektstruktur, definieren.

Der Begriff "mittels 3D-Druck gefertigt" schließt jede Fertigung ein, bei der 3D-Druck zum Einsatz kommt. Die Druckstruktur ist also auch im Sinne der Erfindung mit 3D-Druck gefertigt, wenn das Druckmaterial beispielsweise in eine Form gegossen wurde, die ihrerseits unmittelbar mittels 3D-Druck hergestellt wurde.

Es wurde erkannt, dass mit dem Verfahren gemäß der Erfindung deutlich feinere Objektstrukturen aus dem Polymer gefertigt werden können als nach dem bisherigen Stand der Technik und dass eine größere Klasse von Objektstrukturen überhaupt fertigbar wird. Die hohe Präzision, mit der die Druckstruktur durch 3D-Druck gefertigt werden kann, überträgt sich auf die Konturen des Innenraums, die wiederum die Orte festlegen, an die das Füllmaterial vordringt. Dabei besteht nicht mehr die Randbedingung, dass die Objektstrukturen bis zur Polymerisation eigenständig stabil bleiben müssen. Gleichwohl ist es nach wie vor möglich, das Monomer en bloc zu polymerisieren, so dass es innerhalb der Objektstrukturen, die aus dem Polymer bestehen, keine Grenzflächen zwischen zeitlich nacheinander polymerisierten Bereichen gibt. An derartigen Grenzflächen ist das Polymer am schwächsten und bricht bei mechanischer Belastung des Objekts bevorzugt. Die Festigkeit lässt sich an diesen Grenzflächen auch durch den Einsatz von Verstärkungsfasern nicht verbessern, da die Fasern diese Grenzflächen nicht überspannen.

Es wurde weiterhin erkannt, dass gerade massive Objekte aus dem Polymer, die zugleich filigrane Strukturen aufweisen, auf diese Weise besonders schnell gefertigt werden können. Zum Herstellen filigraner Strukturen mittels 3D-Druck ist eine Düse mit einer kleinen Austrittsöffnung für das flüssige Druckmaterial erforderlich. Dies bringt wiederum mit sich, dass der Massenstrom durch die Austrittsöffnung begrenzt ist und das Ausfüllen eines Objekts sehr lange dauert. Indem nun der Innenraum zunächst mittels 3D-Druck in fester Form definiert und anschließend mit dem Füllmaterial belegt wird, sind die Feinheit der letztendlichen Objektstrukturen und der Massenstrom an Füllmaterial voneinander entkoppelt.

Das Füllmaterial hat beim Einlass in den Innenraum vorteilhaft eine Temperatur, die geringer ist als die Schmelztemperatur T_{M} des erstarrten Druckmaterials. Dann wird die Druckstruktur nicht durch das Füllmaterial angegriffen. Das Füllmaterial darf jedoch auch wärmer sein, wenn und insoweit durch die Druckstruktur genügend Wärme abgeführt werden kann, um die Temperatur der Druckstruktur unterhalb ihrer Schmelztemperatur T_{M} zu halten.

In einer besonders vorteilhaften Ausgestaltung der Erfindung wird ein Füllmaterial gewählt, welches mindestens einen festen Füllstoff enthält. Dieser Füllstoff kann eine beliebige Funktion erfüllen. Beispielsweise kann der Füllstoff ein Recyclingmaterial sein, dessen Verwendung die Materialkosten des hergestellten Objekts senkt. Der Füllstoff kann auch beispielsweise ein Material sein, das dem Objekt ein für seine Verwendung gefordertes Gewicht verleiht.

In einer besonders vorteilhaften Ausgestaltung der Erfindung wird ein Verstärkungsstoff, insbesondere in Form von Fasern, als Füllstoff gewählt. Geeignet sind beispielweise Glasfasern. Die Verwendung derartiger Verstärkungsstoffe in Druckmaterialien führte bislang zu einem weiteren Zielkonflikt in Bezug auf filigrane Strukturen, da eine für filigrane Strukturen erforderliche Düse mit kleiner Austrittsöffnung dazu neigt, durch die Verstärkungsstoffe zu verstopfen. Durch die Faserbeimischung können funktionsfähige Verstärkungseffekte erzielt werden, die eine deutliche Steigerung der mechanischen Eigenschaften bewirken. Gleichzeitig ist durch die Polymerisation in einem Stück die mechanische Festigkeit des Polymers isotrop.

Erfindungsgemäß wird das Druckmaterial mit einem ersten 3D-Druckkopf zu der Druckstruktur zusammengesetzt und das Füllmaterial wird mit zwei zweiten 3D-Druckköpfen im Wechsel eingebracht, die zwei Komponenten des Füllmaterials enthalten. Auf diese Weise kann sichergestellt werden, dass das Füllmaterial nur in den Innenraum gelangt und andere Bereiche an der Außenseite der Druckstruktur nicht verunreinigt werden. Derartige Verunreinigungen sind nach der Polymerisation des Monomers möglicherweise nur noch schwer entfernbar. Weiterhin ist so sichergestellt, dass die Außenoberfläche der Druckstruktur frei von losen Verstärkungsstoffen ist. Derartige Fremdkörper könnten beispielsweise in Kraftstoffsystemen die Funktion von Ventilen behindern oder eine Hochdruckpumpe beschädigen.

Vorteilhaft weist die Austrittsöffnung des zweiten Druckkopfes für das Füllmaterial eine um einen Faktor von mindestens 2, bevorzugt um einen Faktor von mindestens 5, größere Querschnittsfläche auf als die Austrittsöffnung des ersten Druckkopfes für das Druckmaterial. Diese Arbeitsteilung sorgt dafür, dass die feinen Konturen der Druckstruktur mit hoher Präzision gefertigt werden können, während zugleich der Innenraum mit einem hohen Massenstrom an Füllmaterial ausgefüllt wird.

In einer weiteren besonders vorteilhaften Ausgestaltung der Erfindung wird ein wasserlösliches Druckmaterial gewählt. Dies vereinfacht es insbesondere, in einer weiteren besonders vorteilhaften Ausgestaltung der Erfindung die Druckstruktur nach der Polymerisation des Monomers vom Objekt zu entfernen. Das Druckmaterial kann hier vorteilhaft beispielsweise ein biologisch abbaubares Material und hier insbesondere Gelatine sein. Das mit dem Druckmaterial versetzte Wasser, das bei der Durchführung des Verfahrens anfällt, kann dann normal entsorgt werden, da es nicht umweltgefährlich ist. Ist das Druckmaterial hingegen nur mit Hilfe von Säuren, Laugen oder organischen Lösungsmitteln entfernbar, ist eine Nachbehandlung der Abfälle oder gar die Entsorgung als Sondermüll notwendig.

Die Rolle der Druckstruktur ist nicht notwendigerweise die einer bloßen Verschalung, deren Innenraum dem Füllmaterial vorübergehend eine Form gibt. Stattdessen kann das endgültige Objekt auch ein Komposit-Objekt aus der Druckstruktur und dem darin eingebetteten Polymer sein, wobei die Druckstruktur dann eine eigenständige funktionelle und/oder optische Aufgabe erfüllt. Beispielsweise sind Materialpaarungen möglich, mit denen die Eigenschaften des Objekts gezielt eingestellt werden oder das Objekt für Folgeprozesse, wie etwa Laserschweißen, mit anderen Bauteilen kombinierbar zu machen. Auch Kombinationen beider Ansätze, also ein teilweises Auflösen der Druckstruktur nach der Polymerisation des Monomers, sind möglich.

Insoweit die Druckstruktur dauerhaft Teil des endgültigen Objekts sein soll, wird das Füllmaterial in einer weiteren besonders vorteilhaften Ausgestaltung der Erfindung in Eingriff mit Hinterschnitten der Druckstruktur gebracht. Nach der Polymerisation des Monomers entsteht dann eine formschlüssige Verbindung mit den Hinterschnitten. Die Druckstruktur lässt sich dann insbesondere nicht mehr vom Polymer abziehen oder abstreifen. Somit werden unter Hinterschnitten im Sinne der Erfindung allgemein Strukturen verstanden, die, wenn sie mit dem Monomer in Kontakt gebracht werden, nach der Polymerisation mit dem entstandenen Polymer eine formschlüssige Verbindung eingehen.

Die Hinterschnitte können beispielsweise durch eine Porosität in die Druckstruktur eingebracht werden. Zur Erzielung einer derartigen Porosität können beispielsweise die Parameter des 3D-Drucks angepasst werden. Die Druckstruktur sollte dann zumindest eine hinreichende Materialdicke haben, dass jeder Weg vom Innenraum durch die Porenstruktur an irgendeiner Stelle vor dem Erreichen des Außenraums, also vor dem völligen Durchtritt durch die Druckstruktur, versperrt ist und der Innenraum somit gegen einen Austritt des Füllmaterials dicht bleibt.

Alternativ oder auch in Kombination können die Hinterschnitte gedruckte Strukturen sein. Hier zahlt sich aus, dass der 3D-Druck in sehr weiten Grenzen das Einbringen beliebiger Strukturen ermöglicht.

In einer weiteren besonders vorteilhaften Ausgestaltung der Erfindung wird ein Monomer gewählt, das zu einem Polymer polymerisiert, welches mit dem Druckmaterial stoffgleich ist. Das Polymer im Innenraum verbindet sich dann auch chemisch mit der Druckstruktur. Somit entsteht insgesamt ein massives Objekt aus dem Polymer, das gleichzeitig filigrane Außenkonturen aufweist, schnell mit dem Polymer ausfüllbar ist und im Hinblick auf die mechanische Festigkeit als fast einstückig anzusehen ist.

Dies wird insbesondere dadurch möglich, dass die Druckstruktur zum Zeitpunkt der Befüllung mit dem Füllmaterial "frisch" gefertigt ist, d.h. dass die Polymerketten der Druckstruktur noch über chemische Potentiale verfügen, die eine Verbindung mit dem aus dem Füllmaterial hervorgegangenen Polymer ermöglichen. Hierzu trägt zum Einen bei, dass die Druckstruktur vergleichsweise schnell mit dem Füllmaterial gefüllt werden kann. Zum Anderen können die Herstellung der Druckstruktur und das Ausfüllen mit dem Füllmaterial in ein und demselben Gerät erfolgen, ohne dass die Druckstruktur zwischendurch in ein anderes Klima gebracht wird. Wird beispielsweise eine Druckstruktur aus dem Bauraum eines ersten Geräts entfernt und durch die normale Atmosphäre in ein zweites Gerät verbracht, können beispielsweise chemische Potentiale der Polymerketten mit Wasser aus der Luftfeuchtigkeit gesättigt werden, was die Neigung der Druckstruktur, sich mit dem im Innenraum entstehenden Polymer zu verbinden, herabsetzt.

In einer weiteren besonders vorteilhaften Ausgestaltung der Erfindung wird nach dem Einbringen des Füllmaterials weiteres Druckmaterial mittels 3D-Druck aufgebracht. Umfasst die Druckstruktur beispielsweise eine Wanne, so lässt sich diese Wanne nach dem Einbringen des Füllmaterials mit einem gedruckten Deckel verschließen. Es ist dann nicht mehr nötig, nachträglich einen Zugang zu dem Innenraum zu eröffnen.

Dabei kann das Monomer in dem Füllmaterial optional bereits polymerisiert werden, bevor das weitere Druckmaterial aufgebracht wird. Dieses weitere Druckmaterial füllt dann eine eventuelle Schrumpfung des Füllmaterials auf. Weiterhin können auch Überhänge aus dem Monomer über das Druckmaterial gegossen und anschließend wieder mit Druckmaterial überdruckt werden.

Alternativ kann das Monomer zunächst Monomer bleiben und erst zu einem späteren Zeitpunkt polymerisiert werden. Dies ist insbesondere vorteilhaft, wenn das zusätzlich aufgebrachte Druckmaterial einen weiteren Innenraum definiert, der gemeinsam mit dem ersten Innenraum einen zusammenhängenden, mit Füllmaterial gefüllten Bereich bildet. Das Monomer kann dann in diesem Bereich en bloc polymerisieren, so dass in dem letztendlich erhaltenen Polymer keine durch die Grenze zwischen den beiden Innenräumen gebildete Grenzfläche, und damit auch keine mögliche Schwachstelle, entsteht.

Wenn zwischen dem Aufbringen von Druckmaterial und dem Einbringen von Füllmaterial, insbesondere mehrfach, umgeschaltet werden soll, so ist der Druckkopf, bzw. sind die Druckköpfe, des verwendeten 3D-Druckers vorteilhaft so ausgebildet, dass der Austritt von Druckmaterial, bzw. von Füllmaterial, durch Vorlegen eines Unterdrucks an der Austrittsöffnung, und/oder durch einen Ventilverschluss der Austrittsöffnung, unterbindbar ist.

In einer weiteren besonders vorteilhaften Ausgestaltung der Erfindung wird der Innenraum während des Polymerisierens des Monomers mit einer unter Druck stehenden Quelle für das Füllmaterial verbunden. Auf diese Weise kann die bei der Polymerisation entstehende Schrumpfung dadurch kompensiert werden, dass im Umfang der Schrumpfung weiteres Füllmaterial nachgeschoben wird. Diese Schrumpfung kann in der Größenordnung 10 % liegen. Wenn die Polymerisation beispielsweise bei erhöhter Temperatur erfolgt und das fertige Objekt auf Raumtemperatur abgekühlt wird, entsteht nur noch eine weitere Schrumpfung in der Größenordnung 1 %.

Der Zugang zu dem Innenraum für die Zuführung des Füllmaterials kann beim 3D-Druck der Druckstruktur bewusst offen gelassen werden. Beispielsweise kann die Druckstruktur auf einer Grundplatte aufgebaut werden, die eine Durchführung für die Zuführung des Füllmaterials aufweist. Die Druckstruktur kann dann so gestaltet werden, dass ein Kanal von dieser Zuführung in den Innenraum offen bleibt. Der Zugang kann aber auch nachträglich durch einen Anschnitt, eine Bohrung oder eine ähnliche in den Innenraum führende Öffnung hergestellt werden.

In einer weiteren besonders vorteilhaften Ausgestaltung der Erfindung wird die Druckstruktur unter Zuhilfenahme einer nicht zum Objekt gehörenden und vom Objekt trennbaren Trägerstruktur aufgebaut. Die Trägerstruktur kann beispielsweise als formgebendes Element für den 3D-Druck der Druckstruktur dienen, indem sie entsprechende Überhänge des Druckmaterials stützt. Das Objekt kann beispielsweise von der Trägerstruktur getrennt werden, indem es von ihr abgebrochen wird oder indem die Trägerstruktur aufgelöst wird. Dementsprechend kann die Trägerstruktur vorteilhaft wieder aus einem wasserlöslichen Material bestehen, welches vorteilhaft biologisch abbaubar ist, damit insbesondere bei der Anwendung des Verfahrens im industriellen Maßstab keine umweltgefährlichen Abfälle entstehen.

In einer weiteren besonders vorteilhaften Ausgestaltung der Erfindung schließt der Innenraum einen in das Objekt einzubettenden Einleger sein. Derartige Einleger können beispielsweise Leiterbahnen, Buchsen und Stecker sein. Insbesondere können auch elektronische Bauelemente oder Permanentmagnete Einleger sein. Derartige Einleger sind hitzeempfindlich und daher mit vielen 3D-Druckverfahren, die das Druckmaterial auf Temperaturen von 200 °C und mehr erhitzen, nicht umbaubar. Das Ausfüllen des Innenraums mit dem Füllmaterial ist hingegen nicht zwingend auf eine bestimmte Mindesttemperatur angewiesen. Nicht einmal die Polymerisation des Monomers zu dem Polymer setzt zwingend eine erhöhte Temperatur voraus, denn die Polymerisation kann auch durch einen Katalysator, einen Aktivator und/oder durch UV-Licht angestoßen und/oder unterhalten werden. Es ist auch möglich, die Polymerisation durch kurzzeitige Temperaturerhöhung zu aktivieren, so dass sie anschließend bei geringerer Temperatur selbsttätig weiterläuft. Der Einleger wird dann nur in geringem Maße wärmebelastet.

In einer besonders vorteilhaften Ausgestaltung der Erfindung wird Caprolactam als Monomer gewählt und zu dem Polyamid PA6 als Polymer polymerisiert. Insbesondere in Verbindung mit Fasern als Verstärkungsstoffen kann ein gemäß der Erfindung hergestelltes Objekt aus PA6 den mechanischen und technischen Eigenschaften von spritzgegossenem PA6 sehr nahe kommen und diese sogar übertreffen. Somit wird die gestalterische Freiheit und funktionsorientierte Konstruktion im Sinne von Additive Manufacturing mit den verfahrensspezifischen Vorteilen von Spritzguss kombiniert, ohne Inkaufnahme der spezifischen Nachteile, die diese Technologien jeweils für sich genommen mit sich bringen.

Alternativ oder auch in Kombination kann Propen als Monomer gewählt und zu PBT als Polymer polymerisiert werden. Es kann zyklisches PBT oder CBT als Monomer gewählt und zu PBT als Polymer polymerisiert werden. Schließlich kann beispielsweise auch Laurinlactam als Monomer gewählt und zu dem Polyamid PA12 als Polymer polymerisiert werden.

Allgemein kann das Verfahren gemäß der Erfindung alle 3D-Druckverfahren, die mit thermoplastischen Kunststoffen arbeiten, aufwerten. Zugleich kann insbesondere im Prototyping und in Kleinserien der Spritzguss substituiert werden. Insbesondere können der Zeitaufwand und die Kosten, die bei jeder Herstellung und Änderung der Spritzgussform anfallen, vermieden werden.

Weitere, die Erfindung verbessernde Maßnahmen werden nachstehend gemeinsam mit der Beschreibung der bevorzugten Ausführungsbeispiele der Erfindung anhand von Figuren näher dargestellt.

Ausführungsbeispiele

Es zeigt:
Figur 1 Ablaufdiagramm des Verfahrens 100 gemäß einem Ausführungsbeispiel der Erfindung;
Figur 2 Ausführungsbeispiel des Verfahrens 100 nicht gemäß der Erfindung;
Figur 3 Variante des Verfahrens 100 nicht gemäß der Erfindung ausgeführt mit anderem 3D-Drucker 30.
Figur 4 Beispiel für Hinterschnitt 13 und Einleger 15 im Innenraum 12.

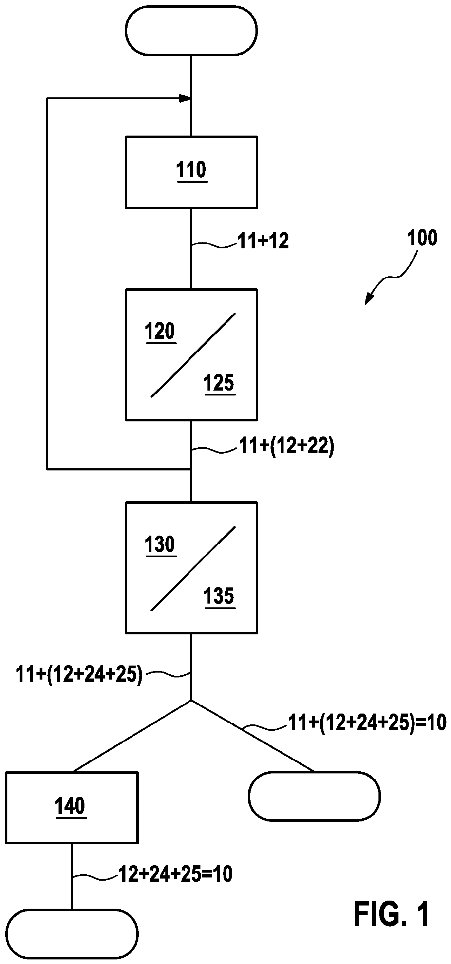

Nach Figur 1 wird in Schritt 110 zunächst eine Druckstruktur 11 gefertigt. Diese Druckstruktur 11 enthält einen Innenraum 12, der in Schritt 120 mit einem Füllmaterial 22, welches Verstärkungsfasern 25 enthält, gefüllt wird. Hierbei wird das Füllmaterial 125 optional in Eingriff mit Hinterschnitten 13 in der Druckstruktur gebracht. Optional können nun weitere Iterationen stattfinden, in denen die Druckstruktur 11 erweitert und entsprechende Innenräume 12 mit Füllmaterial 22 belegt werden.

In Schritt 130 wird das im Füllmaterial 22 enthaltene Monomer 23 zu einem Polymer 24 polymerisiert, wobei optional (Schritt 135) während der Polymerisation weiter Füllmaterial 22 zugeführt wird.

Anschließend kann nach Wahl des Anwenders das Komposit aus Druckstruktur 11 und im Innenraum 12 derselben enthaltenem, mit Fasern 25 verstärktem Polymer 24 als fertiges Objekt 10 verwendet werden, oder es kann in Schritt 140 die Druckstruktur 11 entfernt werden.

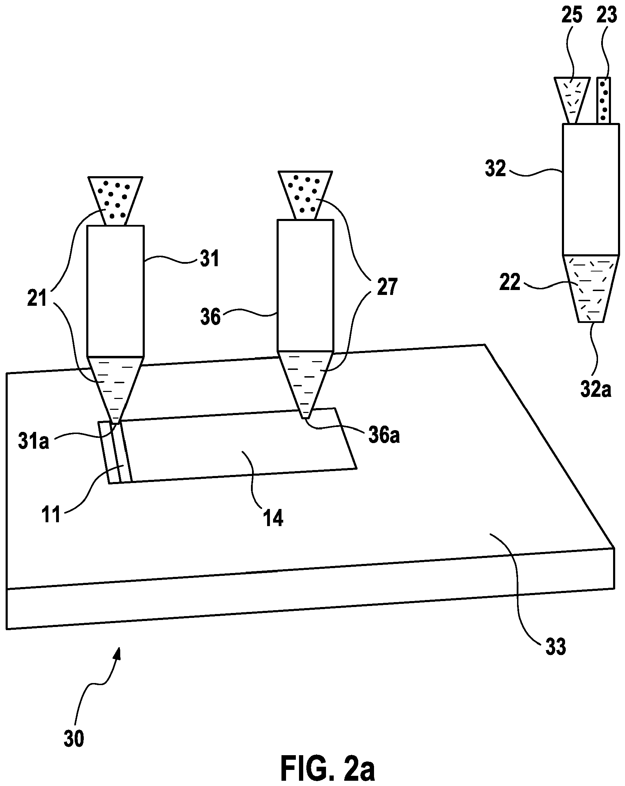

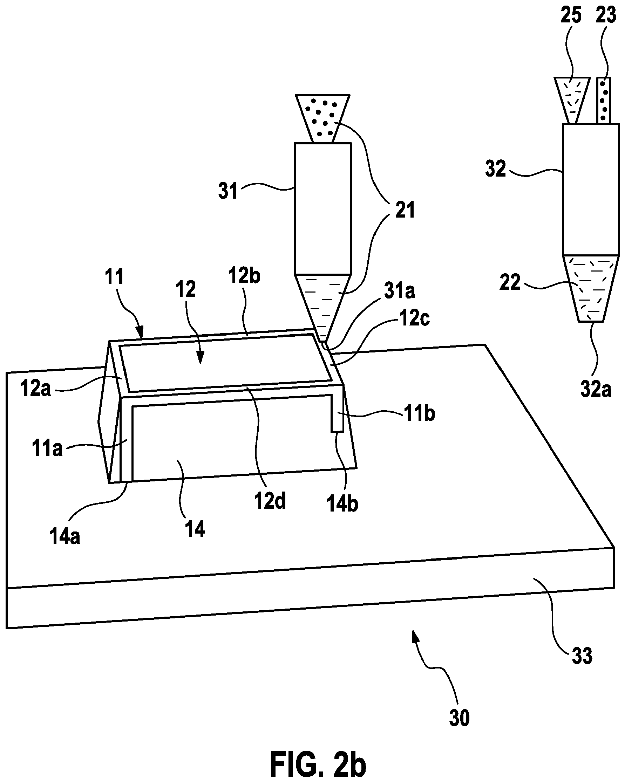

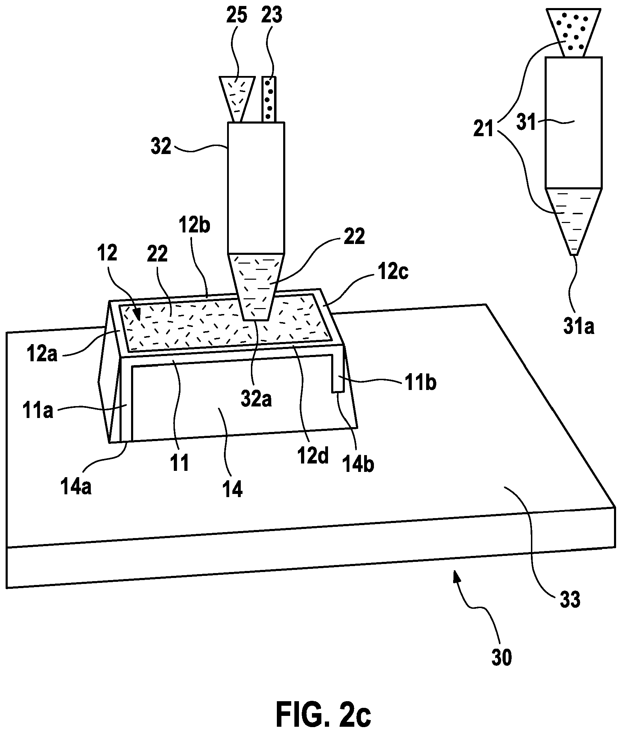

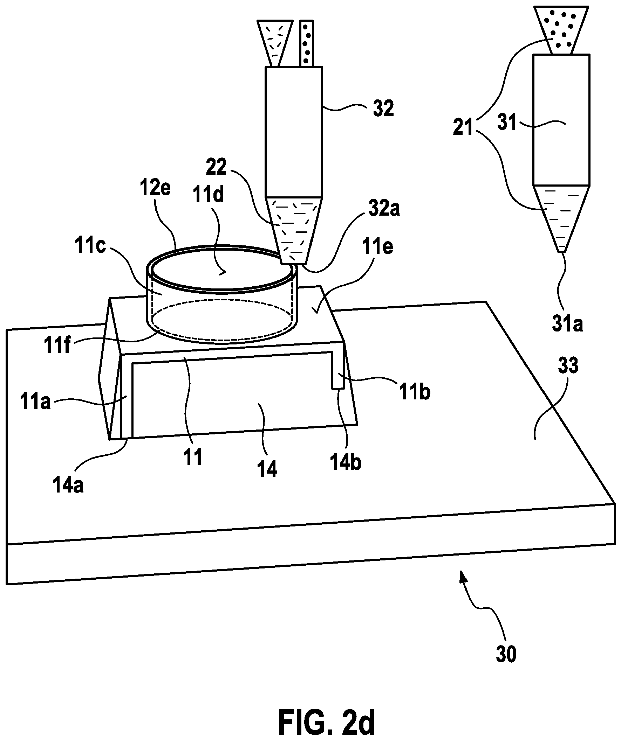

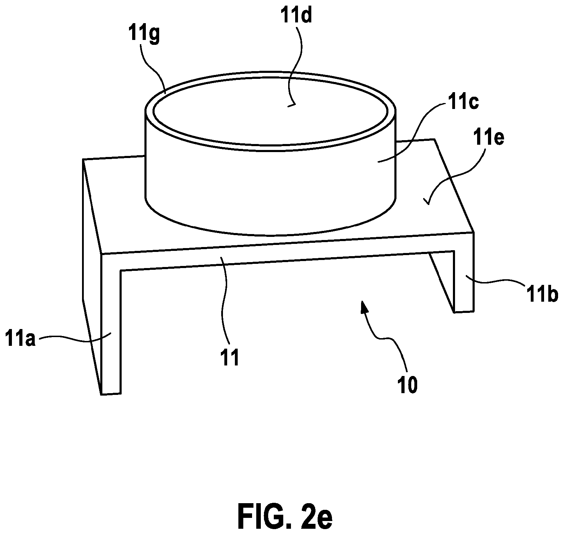

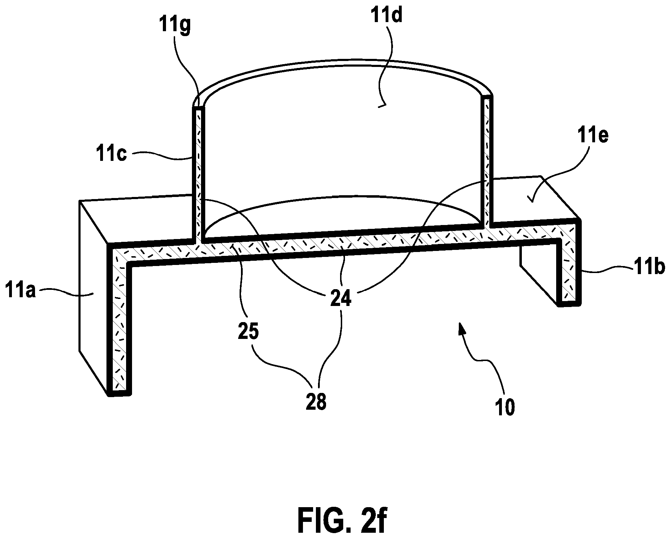

Figur 2 verdeutlicht exemplarisch, wie mit einem beispielhaften 3D-Drucker 30 ein Ausführungsbeispiel des Verfahrens 100 durchgeführt wird.

Nach Figur 2a umfasst der 3D-Drucker 30 eine Grundplatte 33, auf der die Druckstruktur 11 aufzubauen ist. Die Grundplatte 33 ist in einem heizbaren Bauraum angeordnet, der in diesem Ausführungsbeispiel auf einer Temperatur von 160 °C ist. Weiterhin sind drei Druckköpfe 31, 32 und 36 vorgesehen. Der erste Druckkopf 31 heizt ein als Granulat vorliegendes Druckmaterial 21 auf und gibt es in plastifizierter Form über eine Düse mit einer Austrittsöffnung 31a selektiv an den Stellen aus, die zur Druckstruktur 11 gehören. Der zweite Druckkopf 32 erhält sowohl ein Monomer 23 als auch Verstärkungsfasern 25. Im Inneren des zweiten Druckkopfes 32 mischen sich das Monomer 23 und die Verstärkungsfasern 25 zum Füllmaterial 22, das aus der Austrittsöffnung 32a austritt. Der dritte Druckkopf 36 heizt ein weiteres, als Granulat vorliegendes Material 27 bis zur Plastifizierung auf und gibt es durch seine Austrittsöffnung 36a aus. Der dritte Druckkopf 36 dient zum Aufbringen einer Trägerstruktur 14 auf der Grundplatte 33. In jeder aufgebauten Schicht wird an den zur Trägerstruktur 14 gehörenden Orten das Material 27 der Trägerstruktur 14 aufgebracht, und an den zur Druckstruktur 11 gehörenden Orten wird das Druckmaterial 21 aufgebracht.

Figur 2b zeigt eine Momentaufnahme zu einem weiter fortgeschrittenen Zeitpunkt. Sowohl die Trägerstruktur 14 als auch die Druckstruktur 11 sind in die Höhe gewachsen, wobei zwei Schenkel 11a und 11b der Druckstruktur 11 in hierzu korrespondierende Einkerbungen 14a und 14b der Trägerstruktur 14 eingreifen. Die Trägerstruktur 14 hat hier die Funktion, die Druckstruktur 11 waagerecht zu halten, obwohl die Schenkel 11a und 11b unterschiedlich lang sind. In dem in Figur 2b gezeigten Zustand ist die Herstellung der Trägerstruktur 14 abgeschlossen; daher ist der zugehörige dritte Druckkopf 36 nicht mehr eingezeichnet. Die Druckstruktur 11 definiert einen als Wanne ausgebildeten Innenraum 12, der von vier Wällen 12a, 12b, 12c und 12d begrenzt wird. Auch die Schenkel 11a und 11b sind innen hohl und mit Füllmaterial 22 füllbar, was in der gewählten Perspektive nicht sichtbar und daher auch nicht eingezeichnet ist.

Figur 2c zeigt eine Momentaufnahme zu einem weiter fortgeschrittenen Zeitpunkt. Der wannenförmige Innenraum 12, sowie die hieran anschließenden Hohlräume in den Schenkeln 11a und 11b, sind mit dem Füllmaterial 22 gefüllt. Das Füllmaterial 22 ist hier flüssig genug, um auch in diese Hohlräume gegossen werden zu können. In anderen Ausgestaltungen kann es auch beispielsweise mit einer Konsistenz von weichem Wachs in Bahnen ausgelegt werden.

Figur 2d zeigt eine Momentaufnahme zu einem weiter fortgeschrittenen Zeitpunkt. Der wannenförmige, mit Füllmaterial 22 gefüllte Innenraum 12 der Druckstruktur 11 wurde mit einem Deckel 11e aus Druckmaterial 21 verschlossen, in dem eine kreisförmige Nut 11f offen gelassen wurde. Radial beiderseits dieser Nut 11f wurden anschließend mit dem ersten Druckkopf 31 zwei konzentrische Zylinderwände 11c und 11d aufgebaut. Zwischen diesen beiden Zylinderwänden 11c und 11d befindet sich ein Hohlraum 12e, der fluidisch mit dem wannenförmigen Innenraum 12 verbunden ist und somit, wie auch die Hohlräume in den Schenkeln 11a und 11b, funktionell diesem Innenraum 12 zuzuordnen ist. In dem in Figur 2d gezeigten Zustand ist der zweite Druckkopf 32 gerade dabei, den Hohlraum 12e mit weiterem Füllmaterial 22 zu füllen. Sobald dies abgeschlossen ist, wird das im gesamten Füllmaterial 22 enthaltene Monomer 23 zum Polymer 24 polymerisiert. Dies geschieht automatisch durch die im Bauraum herrschende Temperatur. Das Monomer 23 hat bei dieser Temperatur eine festgelegte Verarbeitungszeit, nach der die Polymerisation beginnt.

In der erfindungsgemäßen Ausgestaltung wird das Füllmaterial 22 auch mit zwei Druckköpfen 32, 32' im Wechsel eingebracht, die zwei Komponenten 22a, 22b des Füllmaterials 22 enthalten. Beispielsweise kann der Druckkopf 32 ein Gemisch 22a aus Monomer 23, Katalsyator und Verstärkungsfasern 25 enthalten, und der Druckkopf 32' kann ein Gemisch 22b aus Monomer 23, Aktivator und Verstärkungsfasern 25 enthalten. Durch das wechselweise Auftragen kommt es dann innerhalb des Innenraums 12 zur Durchmischung. In dem auf diese Weise aktivierten Gemisch kann die Polymerisation durch kurzzeitige Erwärmung auf etwa 130 °C angestoßen und anschließend bei einer Bauraumtemperatur zwischen 40 °C und 70 °C fortgesetzt werden.

Weiterhin kann das Füllmaterial 22 auch in einer solchen wachsartigen Konsistenz vorliegen, dass es seinerseits als Stützstruktur für den Deckel 11e fungieren kann.

Um das Ergebnis der Polymerisation isotrop und homogen zu halten, kann auch im Hochvakuum polymerisiert werden. Dadurch sind diverse Gefüge möglich, welche gezielt zur Veränderung der Bauteileigenschaften genutzt werden können.

Figur 2e zeigt das erhaltene fertige Objekt 10 in perspektivischer Darstellung.

Nach der Polymerisation wurde der Hohlraum (Innenraumteil) 12e mit Druckmaterial 21 aus dem ersten Druckkopf 31 mit einem Deckel 11g verschlossen. Anschließend wurde das Objekt 10 einschließlich der Trägerstruktur 14 aus dem 3D-Drucker 30 entnommen, und die Trägerstruktur 14 wurde aufgelöst.

Figur 2f zeigt das fertige Objekt 10 in Schnittzeichnung. Überall dort, wo während des Aufbaus Füllmaterial 22 war, ist nunmehr Polymer 24, welches mit Fasern 25 verstärkt ist. Dieses faserverstärkte Polymer 24 bildet eine Objektstruktur 28, die einen isotropen Kern des Objekts 10 darstellt.

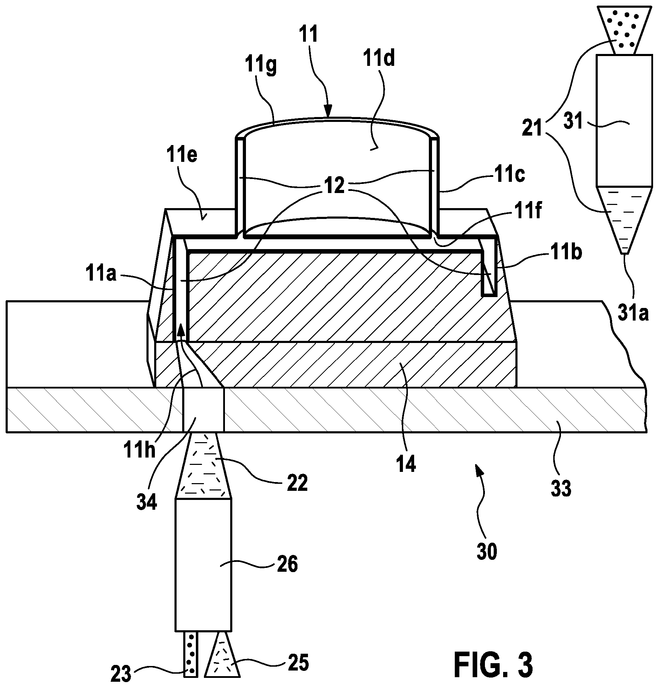

Figur 3 zeigt eine Momentaufnahme einer Variante des in Figur 2 gezeigten Prozesses, bei der ein anderer speziell für die Durchführung des Verfahrens konstruierter 3D-Drucker 30 eingesetzt wird, in teilgeschnittener Ansicht. Dieser 3D-Drucker 30 hat in seiner Grundplatte 33 eine Durchführung 34, die mit einer der Druckstruktur 11, und damit auch dem Objekt 10 insgesamt, abgewandten Seite mit einer unter Druck stehenden Quelle 26 für das Füllmaterial 22 verbindbar ist. In der Trägerstruktur 14 sowie im linken Schenkel 11a der Druckstruktur 11 wurde eigens ein Durchlass 11h gelassen, durch den das Füllmaterial 22 in den Innenraum 12 strömen kann. Diese teilgeschnittene Ansicht verdeutlicht, dass sich letztlich ein gemeinsamer Innenraum 12 durch die ganze Druckstruktur 11 erstreckt, von den Schenkeln 11a und 11b bis zu den konzentrischen Zylinderwänden 11c und 11d. Im Unterschied zu Figur 2 wurde die Druckstruktur 11 hier nicht in Etappen gefertigt, die durch das Aufbringen von Füllmaterial 22 unterbrochen wurden, sondern in einem Arbeitsgang, einschließlich der letzten Deckschicht 11g. Die Überhänge können beispielsweise durch eine entsprechende Anpassung der Trägerstruktur 14, die in dem in Figur 3 gezeigten Zustand nicht mehr sichtbar ist, realisiert werden.

Es können Mischstrukturen aus dem Material 27 der Trägerstruktur 14 zur Herstellung des Gemisches 22 eingebaut werden. Diese können dann beim Entfernen der Trägerstruktur 14 mit entfernt werden. Dies ermöglicht ein einfacheres Handling bei der Polymerisation.

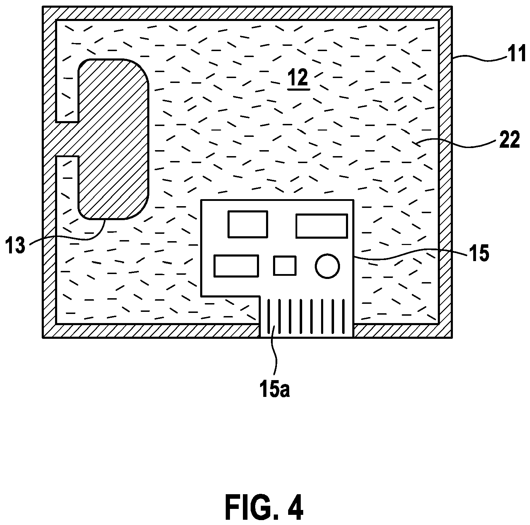

Figur 4 zeigt exemplarisch, wie durch einen Hinterschnitt 13 der Druckstruktur 11 im Innenraum 12 die Bindung zwischen der Druckstruktur 11 und einer nach der Polymerisation aus dem Füllmaterial 22 entstandenen Objektstruktur 28 verstärkt werden kann. Wenn das im Füllmaterial 22 enthaltene Monomer 23 zum Polymer 24 polymerisiert ist, ist das Polymer 24, das im Eingriff mit dem Hinterschnitt 13 steht, dort formschlüssig an die Druckstruktur 11 gebunden.

Weiterhin zeigt Figur 4, wie ein Einleger 15 mit dem Füllmaterial 22 im Innenraum 12 vergossen werden kann. Der Einleger 15 ist in diesem Beispiel eine Elektronikplatine mit Steckkontakten 15a, zu denen die Druckstruktur 11 einen Zugang offen lässt. Die Elektronikplatine 15 ist hitzeempfindlich und kann daher nicht unmittelbar mit dem Druckmaterial 21 umgossen werden, aus dem die Druckstruktur 11 besteht, da dieses Druckmaterial 21 erst bei Temperaturen oberhalb von 160 °C flüssig wird. Durch das Umgießen mit dem Füllmaterial 22 und die anschließende Polymerisation wird die Elektronikplatine 15 hingegen nicht übermäßig wärmebelastet.

## Patentansprüche

1. Verfahren (100) zur Herstellung eines dreidimensionalen Objekts (10), aufweisend folgende Schritte:
eine Druckstruktur (11), welche einen Innenraum (12) definiert, wird mittels 3D-Druck aus einem Druckmaterial (21) gefertigt (110);
ein Füllmaterial (22), welches mindestens ein flüssiges oder pastöses Monomer (23) umfasst, wird in den Innenraum (12) eingebracht (120);
das Monomer (23) wird zu einem Polymer (24) polymerisiert (130),
**dadurch gekennzeichnet, dass** das Druckmaterial (21) mit einem ersten 3D-Druckkopf (31) zu der Druckstruktur (11) zusammengesetzt wird (110) und das Füllmaterial (22) mit zwei zweiten 3D-Druckköpfen (32, 32') im Wechsel eingebracht wird (120), die zwei Komponenten (22a, 22b) des Füllmaterials (22) enthalten.

2. Verfahren (100) nach Anspruch 1, **dadurch gekennzeichnet, dass** der Innenraum (12) die Negativform einer aus dem Polymer (24) herzustellenden Objektstruktur (28), oder einen Teil einer solchen Objektstruktur (28), definiert.

3. Verfahren (100) nach einem der Ansprüche 1 bis 2, **dadurch gekennzeichnet, dass** ein Füllmaterial (22) gewählt wird, welches mindestens einen festen Füllstoff (25) enthält.

4. Verfahren (100) nach Anspruch 3, **dadurch gekennzeichnet, dass** ein Verstärkungsstoff, insbesondere in Form von Fasern, als Füllstoff (25) gewählt wird.

5. Verfahren (100) nach Anspruch 1, **dadurch gekennzeichnet, dass** die Austrittsöffnung (32a) des zweiten Druckkopfes (32, 32') für das Füllmaterial (22) eine um einen Faktor von mindestens 2, bevorzugt um einen Faktor von mindestens 5, größere Querschnittsfläche aufweist als die Austrittsöffnung (31a) des ersten Druckkopfes (31) für das Druckmaterial (21).

6. Verfahren (100) nach einem der Ansprüche 1 bis 5, **dadurch gekennzeichnet, dass** ein wasserlösliches Druckmaterial (21), insbesondere Gelatine, gewählt wird.

7. Verfahren (100) nach einem der Ansprüche 1 bis 6, **dadurch gekennzeichnet, dass** die Druckstruktur (11) nach der Polymerisation (130) des Monomers (23) vom Objekt (10) entfernt wird (140).

8. Verfahren (100) nach einem der Ansprüche 1 bis 7, **dadurch gekennzeichnet, dass** das Füllmaterial (22) in Eingriff mit Hinterschnitten (13) der Druckstruktur (11) gebracht wird (125), so dass nach der Polymerisation (130) des Monomers (23) eine formschlüssige Verbindung mit den Hinterschnitten (13) entsteht.

9. Verfahren (100) nach einem der Ansprüche 1 bis 8, **dadurch gekennzeichnet, dass** ein Monomer (23) gewählt wird, das zu einem Polymer (24) polymerisiert, welches mit dem Druckmaterial (21) stoffgleich ist.

10. Verfahren (100) nach einem der Ansprüche 1 bis 9, **dadurch gekennzeichnet, dass** nach dem Einbringen (120) des Füllmaterials (22) weiteres Druckmaterial (21) mittels 3D-Druck aufgebracht wird (110).

11. Verfahren (100) nach einem der Ansprüche 1 bis 10, **dadurch gekennzeichnet, dass** der Innenraum (12) während des Polymerisierens (130) des Monomers (23) mit einer unter Druck stehenden Quelle (26) für das Füllmaterial (22) verbunden wird (135).

12. Verfahren (100) nach einem der Ansprüche 1 bis 11, **dadurch gekennzeichnet, dass** die Druckstruktur (11) unter Zuhilfenahme einer nicht zum Objekt (10) gehörenden und vom Objekt (10) trennbaren Trägerstruktur (14) aufgebaut wird (110).

13. Verfahren (100) nach einem der Ansprüche 1 bis 12, **dadurch gekennzeichnet, dass** der Innenraum (12) einen in das Objekt (10) einzubettenden Einleger (15) einschließt.

14. Verfahren (100) nach einem der Ansprüche 1 bis 13, **dadurch gekennzeichnet, dass**
Caprolactam als Monomer (23) gewählt und zu einem dem Polyamid PA6 als Polymer (24) polymerisiert (130) wird, und/oder
Propen als Monomer (23) gewählt und zu PBT als Polymer (24) polymerisiert wird, und/oder
zyklisches PBT oder CBT als Monomer (23) gewählt und zu PBT als Polymer (24) polymerisiert wird, und/oder
Laurinlactam als Monomer (23) gewählt und zu dem Polyamid PA12 als Polymer (24) polymerisiert wird.

## Claims

1. Method (100) for producing a three-dimensional object (10), comprising the following steps:
manufacturing (110) a printing structure (11), which defines an interior space (12), from a printing material (21) by means of 3D printing;
introducing (120) a filler material (22) comprising at least one liquid or pasty monomer (23) into the interior space (12);
polymerizing (130) the monomer (23) to form a polymer (24), **characterized in that** the printing material (21) is brought together (110) by means of a first 3D printhead (31) to form the printing structure (11) and the filler material (22) is introduced (120) alternately by means of two second 3D printheads (32, 32') containing two components (22a, 22b) of the filler material (22).

2. Method (100) according to Claim 1, **characterized in that** the interior space (12) defines the negative shape of an object structure (28) to be produced from the polymer (24), or part of such an object structure (28).

3. Method (100) according to either of Claims 1 and 2, **characterized in that** a filler material (22) containing at least one solid filler (25) is selected.

4. Method (100) according to Claim 3, **characterized in that** the filler (25) selected is a reinforcing substance, in particular in the form of fibres.

5. Method (100) according to Claim 1, **characterized in that** the outlet opening (32a) in the second printhead (32, 32') for the filler material (22) has a cross-sectional area which is larger than that of the outlet opening (31a) in the first printhead (31) for the printing material (21) by a factor of at least 2, preferably by a factor of at least 5.

6. Method (100) according to one of Claims 1 to 5, **characterized in that** a water-soluble printing material (21), in particular gelatine, is selected.

7. Method (100) according to one of Claims 1 to 6, **characterized in that** the printing structure (11) is removed (140) from the object (10) after the polymerization (130) of the monomer (23).

8. Method (100) according to one of Claims 1 to 7, **characterized in that** the filler material (22) is made to engage (125) with undercuts (13) of the printing structure (11), resulting in a form-fitting connection with the undercuts (13) after the polymerization (130) of the monomer (23).

9. Method (100) according to one of Claims 1 to 8, **characterized in that** a monomer (23) which polymerizes to form a polymer (24) of the same substance as the printing material (21) is selected.

10. Method (100) according to one of Claims 1 to 9, **characterized in that** further printing material (21) is applied (110) by means of 3D printing after introducing (120) the filler material (22).

11. Method (100) according to one of Claims 1 to 10, **characterized in that** the interior space (12) is connected (135) to a pressurized source (26) for the filler material (22) during the polymerization (130) of the monomer (23).

12. Method (100) according to one of Claims 1 to 11, **characterized in that** the printing structure (11) is built up (110) using a support structure (14) which is not part of the object (10) and can be separated from the object (10).

13. Method (100) according to one of Claims 1 to 12, **characterized in that** the interior space (12) encloses an insert (15) to be embedded into the object (10).

14. Method (100) according to one of Claims 1 to 13, **characterized in that**
the monomer (23) selected is caprolactam, which is polymerized (130) to form the polyamide PA6 as polymer (24), and/or
the monomer (23) selected is propene, which is polymerized to form PBT as polymer (24), and/or
the monomer (23) selected is cyclic PBT or CBT, which is polymerized to form PBT as polymer (24), and/or
the monomer (23) selected is laurolactam, which is polymerized to form the polyamide PA12 as polymer (24).

## Revendications

1. Procédé (100) de fabrication d'un objet tridimensionnel (10), présentant les étapes suivantes :
une structure d'impression (11) définissant un espace intérieur (12) est fabriquée (110) par impression 3D à partir d'un matériau d'impression (21) ;
un matériau de remplissage (22) comprenant au moins un monomère liquide ou pâteux (23) est introduit (120) dans l'espace intérieur (12) ;
le monomère (23) est polymérisé (130) en un polymère (24),
**caractérisé en ce que** le matériau d'impression (21) est assemblé (110) avec une première tête d'impression 3D (31) pour former la structure d'impression (11) et le matériau de remplissage (22) est introduit (120) en alternance avec deux deuxièmes têtes d'impression 3D (32, 32') contenant deux composants (22a, 22b) du matériau de remplissage (22).

2. Procédé (100) selon la revendication 1, **caractérisé en ce que** l'espace intérieur (12) définit la forme négative d'une structure d'objet (28) à fabriquer à partir du polymère (24), ou une partie d'une telle structure d'objet (28).

3. Procédé (100) selon l'une quelconque des revendications 1 à 2, **caractérisé en ce qu'**un matériau de remplissage (22) qui contient au moins une charge solide (25) est choisi.

4. Procédé (100) selon la revendication 3, **caractérisé en ce qu'**une matière de renforcement, notamment sous forme de fibres, est choisie en tant que charge (25).

5. Procédé (100) selon la revendication 1, **caractérisé en ce que** l'ouverture de sortie (32a) de la deuxième tête d'impression (32, 32') pour le matériau de remplissage (22) présente une surface de section transversale plus grande d'un facteur d'au moins 2, de préférence d'un facteur d'au moins 5, que l'ouverture de sortie (31a) de la première tête d'impression (31) pour le matériau d'impression (21).

6. Procédé (100) selon l'une quelconque des revendications 1 à 5, **caractérisé en ce qu'**un matériau d'impression (21) soluble dans l'eau est choisi, notamment la gélatine.

7. Procédé (100) selon l'une quelconque des revendications 1 à 6, **caractérisé en ce que** la structure d'impression (11) est retirée (140) de l'objet (10) après la polymérisation (130) du monomère (23) .

8. Procédé (100) selon l'une quelconque des revendications 1 à 7, **caractérisé en ce que** le matériau de remplissage (22) est mis en prise (125) avec des contre-dépouilles (13) de la structure d'impression (11), de telle sorte qu'après la polymérisation (130) du monomère (23), une liaison par complémentarité de forme avec les contre-dépouilles (13) est produite.

9. Procédé (100) selon l'une quelconque des revendications 1 à 8, **caractérisé en ce qu'**un monomère (23) qui se polymérise en un polymère (24) qui est identique au matériau d'impression (21) est choisi.

10. Procédé (100) selon l'une quelconque des revendications 1 à 9, **caractérisé en ce qu'**après l'introduction (120) du matériau de remplissage (22), du matériau d'impression (21) supplémentaire est appliqué (110) par impression 3D.

11. Procédé (100) selon l'une quelconque des revendications 1 à 10, **caractérisé en ce que** l'espace intérieur (12) est relié (135) à une source sous pression (26) pour le matériau de remplissage (22) pendant la polymérisation (130) du monomère (23).

12. Procédé (100) selon l'une quelconque des revendications 1 à 11, **caractérisé en ce que** la structure d'impression (11) est construite (110) à l'aide d'une structure de support (14) qui n'appartient pas à l'objet (10) et qui peut être séparée de l'objet (10) .

13. Procédé (100) selon l'une quelconque des revendications 1 à 12, **caractérisé en ce que** l'espace intérieur (12) comprend un insert (15) à encastrer dans l'objet (10).

14. Procédé (100) selon l'une quelconque des revendications 1 à 13, **caractérisé en ce que**
le caprolactame est choisi en tant que monomère (23) et polymérisé (130) en polyamide PA6 en tant que polymère (24), et/ou
le propène est choisi en tant que monomère (23) et polymérisé en PBT en tant que polymère (24), et/ou
le PBT cyclique ou le CBT est choisi en tant que monomère (23) et polymérisé en PBT en tant que polymère (24), et/ou
le laurine-lactame est choisi en tant que monomère (23) et polymérisé en polyamide PA12 en tant que polymère (24).
